# EUROPÄISCHE PATENTSCHRIFT

(11) **EP 0 540 705 B1**
(45) Veröffentlichungstag und Bekanntmachung des Hinweises auf die Patenterteilung: **25.01.1995**
(21) Anmeldenummer: 92909595.8
(22) Anmeldetag: 09.05.1992
(51) Int. Cl.: B01D 25/127, B01D 25/28, B01D 25/30

(54) **PLATTENFILTER**
PLATE FILTER
FILTRE A PLAQUES

(30) Priorität: 23.05.1991 DE 4116874
(43) Veröffentlichungstag der Anmeldung: 12.05.1993
(73) Patentinhaber: Eberhard Hoesch & Söhne GmbH Verfahrens- und Anlagentechnik, D-52477 Alsdorf (DE)
(72) Erfinder: VAN EGDOM, Richard, sen., D-5164 Nörvenich (DE); GEISS, Rudolf, D-5162 Niederzier (DE)
(74) Vertreter: Langmaack, Jürgen, Dipl.-Ing.
(86) Internationale Anmeldenummer: EP9201022
(87) Internationale Veröffentlichungsnummer: WO9220424

(56) Entgegenhaltungen:
- DE-A- 1 461 500
- US-A- 3 968 039

## Beschreibung

Die Erfindung betrifft ein Plattenfilter entsprechend dem Oberbegriff des Anspruchs 1.

Um bei Plattenfiltern dieser Art zu einem großen Kammervolumen und damit auch zu einer entsprechend großen Kuchendicke zu kommen, ist es erforderlich, entweder die Filterplatten topfartig auszubilden, wobei der Boden des Topfes durch die Preßmembran gebildet wird und die Filterfläche durch die der Topfmembran gegenüberliegende, die Filterkammer auf der anderen Seite begrenzende nächstfolgende Filterplatte gebildet wird, wie dies beispielsweise auf der DE-C 14 61 500 ersichtlich ist. Eine derartige Filterplattengestaltung hat jedoch den Nachteil, daß sie zum einen nur eine Filterfläche aufweist und zum anderen nur in der vorbekannten horizontalen Anordnung der Filterplatten ausführbar ist, da nur bei horizontaler Filterplattenaordnung nach Abschluß der Filtration der Kuchen ausgetragen werden kann.

Um nun bei derartige Plattenfiltern zu einer Erhöhung der Filterleistung zu gelangen, hat man die Filterplatten zweiseitig wirkend ausgebildet und die Vergrößerung des Filterraumes dadurch bewirkt, daß jeweils zwischen zwei Filterplatten ein Kuchenrahmen angeordnet wurde. Der Nachteil derartiger Kuchenrahmen besteht darin, daß beim Öffnen nicht sichergestellt ist, daß der Filterkuchen auch sofort herausfällt und über das durchgezogene Filterband vollständig aus der Filterkammer heraustransportiert wird. Nachfallende Filterkuchenreste können im Bereich der Dichtflächen auf dem Filterband liegen bleiben, was zu Undichtigkeit des gesamten Systems führt. Weiterhin benötigen solche Kuchenrahmen einen hohen Füllungsgrad, damit das umlaufende Filterband und die Membranen oder die Membranplatten beim Abpressen nicht zerstört werden. Dies ist nur mit gut filtrierbaren Suspensionen zu erreichen. Schließlich benötigt die Anordnung eines Kuchenrahmens sehr hohe Schließkräfte, damit eine genügend große Klemmkraft auf den Kuchenrahmen aufgebracht wird, der sonst aufgrund des Suspensionsdruckes nach außen aufgeweitet würde, was zu Undichtigkeiten und damit zum Ausfall der gesamten Presse führen würde. Der Trübezulauf muß bei derartigen doppelseitig filtrierenden Filterkammer zwangsläufig über den zwischen den beiden Filterflächen liegenden Kuchenrahmen erfolgen, wie dies beispielsweise aus DE-C 20 43 156 ersichtlich ist.

Aus US-A-564 715 und US-A-3 968 039 ist es bekannt, zwischen je zwei Filterplatten eines Filterplattenpaketes für den Trübezulauf ein Einlaßelement vorzusehen, das jeweils beim Öffnung und Schließen des Filterplattenpaketes auf einer entsprechenden Führung verfahren und in entsprechendem Abstand zu den einander benachbarten Filterplatten gehalten werden kann. Das Einlaßelement, das auf seiner Außenseite mit einer Trübezulaufleitung in Verbindung steht, weist bei den vorbekannten Ausführungsformen einen tüllenartigen Ansatz auf, der durch eine Ausnehmung im Dichtrand der beiden aneinandergrenzenden Filterplatten hindurchragt und die von den beiden benachbarten Filterplatten begrenzte Filterkammer einmündet. Eine derartige Ausgestaltung des Trübezulaufs führt zu erheblichen Abdichtproblemen bei modernen Plattenfiltern mit ihren relativ hohen Betriebsdrücken.

Der Erfindung liegt nun die Aufgabe zugrunde, ein Plattenfilter der eingangs bezeichneten Art zu schaffen, das auch ohne die Verwendung von Kuchenrahmen die Anordnung von zwei Filterflächen je Filterkammer ermöglicht.

Diese Aufgabe wird erfindungsgemäß mit den im kennzeichnenden Teil des Anspruchs 1 angegebenen Merkmalen gelöst. Diese Anordnung erlaubt es, das Plattenfilter sowohl mit vertikal ausgerichteten als auch mit horizontal ausgerichteten Filterplatten zu konzipieren. Das Filtermittel kann hierbei insbesondere bei horizontal ausgerichteten Filterplatten als Endlosband konzipiert sein, wobei das Filterband entweder zick-zack-förmig durch das gesamte Filterplattenpaket hindurchgeführt ist oder aber als Endlosband jede Filterplatte zwischen sich einschließend umschlingt. Da die beiden auf einander zugekehrten Filterplattenflächen liegenden Filtermittel vom Dichtrand bei geschlossenem Filterplattenpaket dichtend aufeinandergepreßt werden, ist es mit der erfindungsgemäßen Lösung möglich, die zu filtrierende Trübe zwischen die beiden Filtermittel einzubringen, die die Filterkammer nach beiden Seiten hin begrenzen. Eine, aber auch beide einander zugekehrten Filterflächen können bei entsprechender Höhe des Dichtrandes topfartig ausgebildet sein und mit einer Preßmembran versehen sein, auf der das Filtermittel aufliegt. Der als Trübezulauf dienende Rohrkörper ist nunmehr abdichtend in eine Ausnehmung eingelegt, die am Dichtrand einer, zweckmäßig jedoch symmetrisch zur Teilungslinie in den einander berührenden Dichträndern angeordnet ist und wird bei zusammengedrücktem Filterplattenpaket abdichtend gehalten. Der Rohrkörper kann hierbei insgesamt mit einer Gummierung versehen sein, so daß eine einwandfreie Abdichtung gegenüber der Filterkammer gewährleistet ist. Dadurch, daß der als Trübezulauf dienende Rohrkörper über Öffnungsabstandsmittel mit den einzelnen Filterplatten verbunden ist, wie dies beispielsweise von Kuchenrahmen her bekannt ist, wird gewährleistet, daß der Rohrkörper in geöffnetem Zustand mit Abstand zum Dichtrand gehalten wird, so daß das Filterband frei hindurchbewegt und der gebildete Kuchen einwandfrei ausgetragen werden kann. Zugleich ist sichergestellt, daß der Rohrkörper immer genau in bezug auf die Ausnehmung im Dichtrand gehalten wird.

Da die Filterplatten insbesondere bei Plattenfiltern mit bewegbarem Filterband quadratisch oder rechteckig ausgebildet sind, kann der als Trübezulauf dienende Rohrkörper, bezogen auf die Durchlaufrichtung des Filterbandes, an dem der Austragsseite der Filterkammer gegenüberliegenden Dichtrand und/oder in bezug auf die Durchlaufrichtung des Filterbandes an beiden Längsseiten der Filterplatte angeordnet sein. Der Rohrkörper kann sich hierbei nur über einen Teil der Länge der betreffenden Plattenseite erstrecken.

In einer vorteilhaften Ausgestaltung der Erfindung ist vorgesehen, daß der Rohrkörper sich im wesentlichen über die Filterplattenbreite erstreckt. Diese Anordnung hat den Vorteil, daß der Trübezulauf nicht "punktförmig" in die Filterkammer erfolgt, sondern über die gesamte Filterkammerbreite, so daß bei entsprechender Dimensionierung der Trübeaustrittsöffnungen des Rohrkörpers auch bei großen Durchsatzmengen die Trübe mit geringer Strömungsgeschwindigkeit in die Filterkammer eintreten kann und somit ein Freispülen der Filterflächen im Eintrittsbereich vermieden wird. Ein weiterer Vorteil dieser Ausgestaltung besteht darin, daß ein derartiger, sich über die gesamte Filterplattenbreite erstreckender Rohrkörper in einfacher Weise nach außen geführt und mit entsprechenden Schlauchleitungen für den Trübezulauf verbunden werden kann. Dies gilt sowohl für eine Anordnung auf der dem Kuchenabwurf gegenüberliegenden Seite der Filterkammer als auch für eine, bezogen auf den Banddurchlauf, seitliche Anordnung. Eine derartige Ausbildung des Rohrkörpers erlaubt es in weiterer vorteilhafter Ausgestaltung, daß die Ausnehmung im Dichtrand als längslaufende Nut ausgebildet ist. Hierdurch ergeben sich genau definierbare, die Abdichtung vereinfachende geometrische Verhältnisse.

In weiterer Ausgestaltung der Erfindung ist vorgesehen, daß die mit der Filterplatte verbundene Preßmembran randseitig verdickt ist und den Dichtrand bildet. Diese Ausgestaltung erlaubt es, Filterplatten mit integrierter Preßmembran, wie sie beispielsweise von Kunststoff-Filterplatten her bekannt sind, oder aber Filterplatten mit auf einen Plattengrundkörper aufgeschweißten Membranen herzustellen. Zweckmäßig ist es hierbei, wenn in weiterer Ausgestaltung der Erfindung die Ausnehmung zur Aufnahme des Rohrkörpers im Dichtrandteil der Preßmembran nahe der Filterkammer angeordnet ist. Hierdurch ist eine einwandfrei Abdichtung der Filterkammer gewährleistet. Besonders vorteilhaft ist diese Ausgestaltung, wenn der Rohrkörper sich im wesentlichen über die gesamte Filterplattenbreite erstreckt. Zweckmäßig ist es insbesondere bei einem sich über die gesamte Filterplattenbreite erstreckenden Rohrkörper, wenn dieser quer zu seiner Längserstreckung verformbar ist, so daß er sich unter der Einwirkung des Schließdruckes in gleicher Weise wie der Dichtrand verformen kann.

In einer anderen Ausgestaltung der Erfindung ist vorgesehen, daß die Nut zur Aufnahme des Rohrkörpers randseitig an den Dichtrandteil der Preßmembran außen angrenzend im Filterplattenrand angeordnet ist. Diese Anordnung hat den Vorteil, daß die Nut zur Aufnahme des Rohrkörpers aus der kritischen Zone unmittelbar am Rand der Filterkammer herausgenommen ist, so daß in diesem Bereich der Dichtrand ungeschwächt und eine einwandfreie Abdichtung gewährleistet ist. Hierzu ist es lediglich erforderlich, daß die einander zugeordneten Dichtränder der einander gegenüberliegenden Filterplatten mit Rillen versehen sind, die bei geschlossener Filterkammer mit den Trübeaustrittsöffnungen des Rohrkörpers fluchten. Der Rohrkörper selbst muß in diesen Bereichen wiederum bei geschlossener Filterkammer den Spalt einwandfrei abdichten.

Die Erfindung wird anhand schematischer Zeichnungen von Ausführungsbeispielen näher erläuter. Es zeigen:
- Fig. 1: ein Plattenfilter mit horizontal ausgerichteten Filterplatten,
- Fig. 2: ein Plattenfilter mit vertikal ausgerichteten Filterplatten,
- Fig. 3: eine erste Ausführungsform für einen Trübezulauf für Plattenfilter gem. Fig. 1 und Fig. 2 im Vertikalschnitt,
- Fig. 4: eine andere Gestaltung der Ausführungsform gem. Fig. 3 im Vertikalschnitt,
- Fig. 5: eine Abwandlung der Ausführungsform gem. Fig. 4,
- Fig. 6: in einer Aufsicht die Gestaltung gem. Fig. 5 in Form eines sogenannten kurzen Zulaufs.

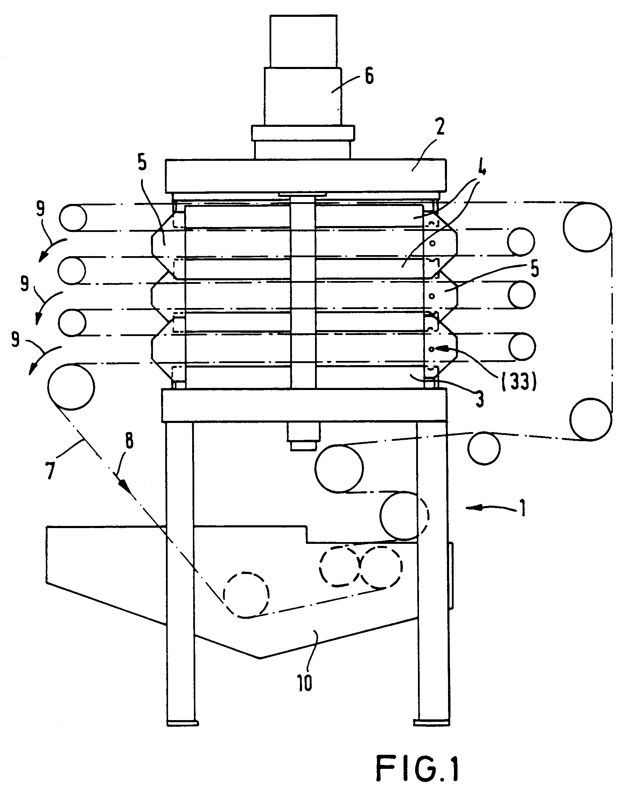

Das in Fig. 1 dargestellte Ausführungsbeispiel zeigt einen sogenannten Preßfilterautomat in geöffnetem Zustand. Hierbei sind in einem Maschinengestell 1 zwischen zwei Endplatten 2 und 3 mehrere Filterplatten 4 angeordnet. Die Endplatten 2 und 3 bilden hierbei Teil des Gestelles, wobei die Endplatte 3 gestellfest ist, während die Endplatte 2 mit Hilfe einer vorzugsweise hydraulisch ausgebildeten Schließeinrichtung 6 relativ zur Endplatte 3 bewegbar ist. Die den zwischen Endplatte 2 und Endplatte 3 liegenden Filterplatten 4 zugekehrten Flächen der Endplatte 2 und 3 sind hierbei als Filterkammerwandungen ausgebildet, d.h. mit Kannelierungen für den Filtratablauf oder auch mit einer entsprechend kannelierten Preßmembran versehen. Die einzelnen Filterplatten 4 sind über Abstandsöffnungsmittel 5 kettenartig an der nach oben bewegbaren Endplatte 2 aufgehängt, so daß beim Anheben der Endplatte 2 sich von oben beginnend, die einzelnen Filterkammern nacheinander öffnen.

Durch das Filterplattenpaket ist ein bandförmiges Filtermittel 7 zick-zack-förmig hindurchgeführt, so daß jede Filterplatten von beiden Seiten mit Filtermittel abgedeckt ist. Das endlose Filterband 7 ist hierbei über Umlenk- und Antriebsrollen in üblicher Weise geführt und wird bei geöffnetem Filterplattenpaket in Richtung des Pfeiles 8 durch das Filterplattenpaket hindurchgezogen, so daß der jeweils auf dem Filterband aufliegende Filterkuchen nach einer Seite hin aus dem Plattenfilter abgeworfen wird (Pfeil 9). Der unten aus dem Filterplattenpaket herausgezogene Teil des Filterbandes 7 wird durch eine Wascheinrichtung 10 hindurch und oben wieder in das Filterplattenpaket eingeführt.

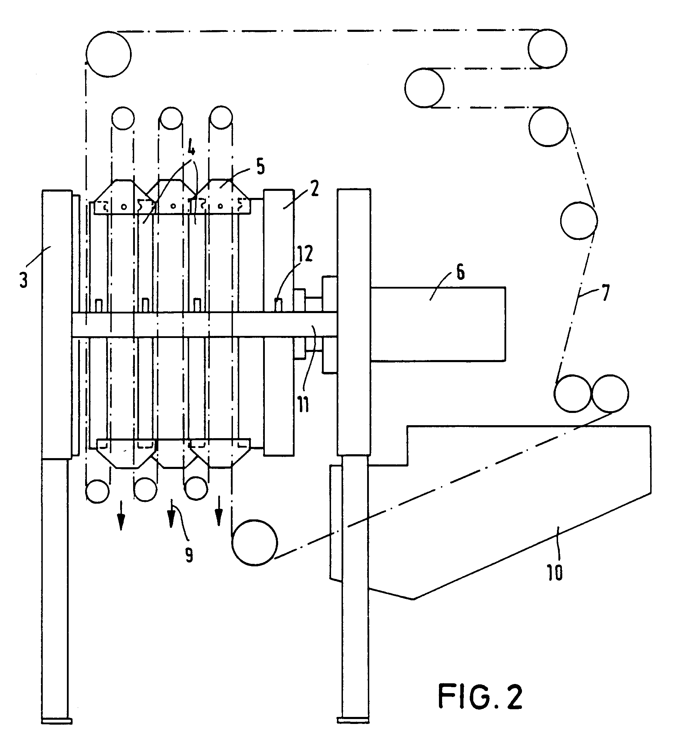

In Fig. 2 ist die Anordnung eines Plattenfilters mit vertikal ausgerichteten Filterplatten ebenfalls in geöffneter Stellung dargestellt. Der Aufbau entspricht im wesentlichen der Ausführungsform gem. Fig. 1, so daß hier für gleiche Bauelemente gleiche Bezugszeichen eingesetzt worden sind. Bei Plattenfiltern mit vertikal ausgerichteten Filterplatten ist jedoch die gestellfeste Endplatte 3 über zwei seitliche Zuganker 11 mit der ebenfalls gestellfest angeordneten Schließeinrichtung 6 verbunden, so daß die bewegbare Endplatte 2 sowie die Filterplatten 4 über seitlich angeordnete Auflagenasen 12 auf dem Zuganker 11 aufliegend geführt sind. Über Öffnungsabstandsmittel 5, die in ähnlicher Weise aufgebaut sind wie bei der Ausführungsform gem. Fig. 1, ist wiederum dafür Sorge getragen, daß beim Öffnen des Filterplattenpaketes die einzelnen Filterkammern nacheinander geöffnet werden und den gleichen Öffnungsabstand einnehmen. Auch bei dieser Ausführungsform ist wieder ein endloses Filterband 7 vorgesehen, das über entsprechende Antriebs- und Umlenkrollen durch eine Wascheinrichtung 10 zick-zack-förmig durch das Plattenpaket hindurchgeführt ist.

Sowohl bei der Ausführungsform gem. Fig. 1 als auch bei der Ausführungsform gem. Fig. 2 ist es anstelle eines zick-zack-förmig durch das gesamte Filterplattenpaket hindurchgeführtes Filterband möglich, jeweils ein einer Filterplatte zugeordnetes Endlosfilterband vorzusehen, das lediglich eine Filterplatten umschlingt. Bei einem Plattenfilter mit vertikal ausgerichteten Filterplatten ist es darüber hinaus möglich, anstelle eines bewegbaren Filterbandes fest mit den Filterplatten verbundene Filtertücher zu verwenden, da der Kuchenaustrag hierbei auch durch Schwerkraft, unterstützt durch die Preßmembran erfolgen kann. Das Filtertuch wird hierbei, sofern notwendig, durch eine gesondere Wascheinrichtung gereinigt, die bei geöffnetem Plattenpaket jeweils zwischen zwei Platten eingeführt wird und diese abspritzt.

Der Trübezulauf zu einer durch jeweils zwei benachbarte Filterplatten 4 begrenzten Kammer kann nun nach dem Stand der Technik in zweierlei Weise erfolgen. Bei einer Bauform weisen die einzelnen Filterplatten im Bereich des Dichtrandes jeweils eine oder mehrere Bohrungen auf, die bei zusammengeschobenem Plattenpaket einen Strömungskanal bilden, von dem jeweils im Dichtrand jeder einzelnen Filterplatte verlaufende Kanäle abzweigen, die in die Filterkammer einmünden. Bei einer anderen Ausführungsform von Plattenfiltern ist es üblich, im Dichtrand in der Plattenebene verlaufende Kanäle vorzusehen, die nach außen herausgeführt sind und dort mit jeweils einem Zulaufschlauch an den Trübezulauf angeschlossen sind.

Will man nun für Plattenfilter, wie in Fig. 1 und Fig. 2 gezeigt, beide, eine Filterkammer begrenzende Plattenflächen mit einer Preßmembran versehen und zur Verdoppelung der Filterfläche mit einem Filtermittel versehen, dann ist die vorstehend beschriebene, herkömmlich Lösung des Trübezulaufs nicht mehr möglich.

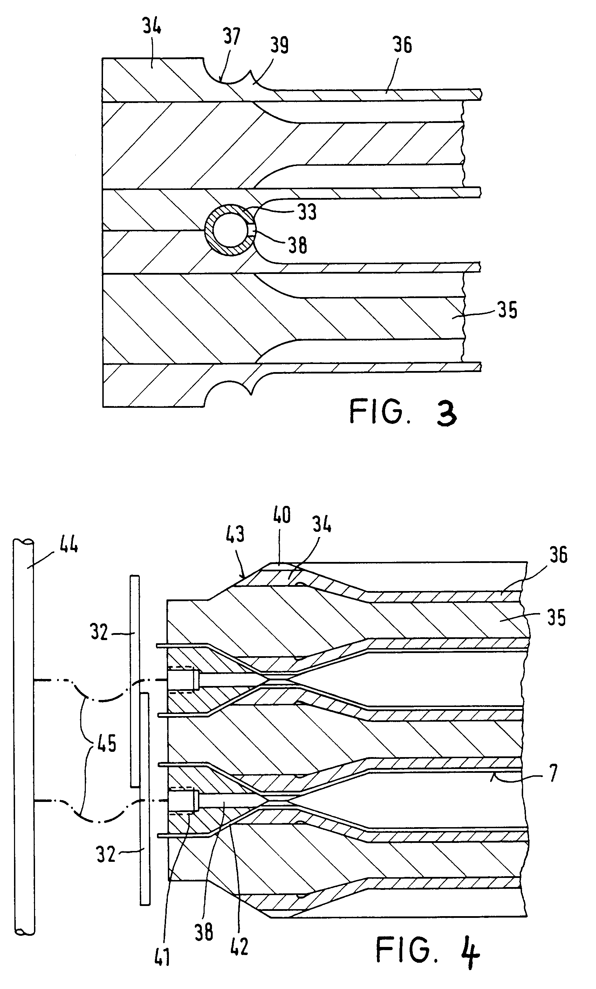

In Fig. 3 ist eine Ausführungsform in einem Vertikal-Teilschnitt dargestellt. Bei dieser Ausführungsform ist ein Rohrkörper 33 vorgesehen, der in einer entsprechenden Ausnehmung des Dichtrandes 34 einer auf einem Plattengrundkörper 35 aufgeklebten Preßmembran 36 eingelegt ist. Die Ausnehmung 37 erstreckt sich hierbei über die gesamte Breite der Filterplatte, so daß sie an beiden Enden seitlich offen ist. An einem oder an beiden Enden ist der eingelegte Rohrkörper über entsprechende Schlauchanschlüsse mit der Trübezufuhr verbunden. Die beiden die Filterplatte seitlich überragenden Enden des Rohrkörpers 33 sind über Abstandsführungsmittel miteinander verbunden, so daß der Rohrkörper bei geöffnetem Filterplattenpaket in der Mittelebene des Zwischenraumes zwischen zwei Filterplatten gehalten wird.

Der Rohrkörper 33 ist mit Trübezulauföffnungen 38 versehen, die in die zwischen den beiden Preßmembranen 36 befindliche Filterkammer einmünden. Bei einem Trübeanschluß nur an einem Ende des Rohrkörpers 33 sind zweckmäßigerweise die Trübezulauföffnungen 38 über die Länge des Rohrkörpers in unterschiedlicher Größe vorgesehen, wobei unmittelbar am Einlaufbereich die kleineren Durchtrittsquerschnitte vorgesehen sind, während am Ende die größten Durchtrittsquerschnitte vorgesehen sind. Hierdurch wird ein gleichmäßiger Trübezulauf über die Länge und über die gesamte Filterkammerbreite erreicht. Da der Dichtrand der Filterplatte 4 durch eine Verdickung der Membran gebildet wird, und somit im Hinblick auf die Verformbarkeit des Membranteils 36 ebenfalls geringfügig verformbar ist, wird zweckmäßigerweise für den Rohrkörper 33 ein ebenfalls verformbares Material gewählt, so daß beim Zusammenpressen des Filterplattenpaketes der Rohrkörper 33 quer zu seiner Längserstreckung ebenfalls geringfügig verformbar ist. Der die Ausnehmung 37 zur Filterkammer hin begrenzende stegförmige Teil 39 dient hierbei zugleich als Dichtlippe gegenüber dem Innendruck in der Filterkammer und verbessert die Abdichtung in diesem Bereich. Der Querschnitt des Rohrkörpers 33 kann hierbei unter Anpassung an die Plattendicke bzw. die Dicke des durch die Membran gebildeten Dichtrandes zur Erhöhung des Durchtrittsquerschnittes des Rohrkörpers selbst auch abweichend vom Kreisquerschnitt einen Ovelquerschnitt aufweisen, so daß hier ohne Beeinträchtigung der Bauhöhe ein größerer Strömungsquerschnitt erreicht wird. Die vorstehend dargestellte und beschriebene Ausführungsform für einen sich über die gesamte Breite einer Filterplatte erstreckenden Rohrkörpers kann auch einer Vollkunststoff-Filterplatte eingesetzt werden, bei der die Preßmembran einstückig mit dem Plattenkörper verbunden ist.

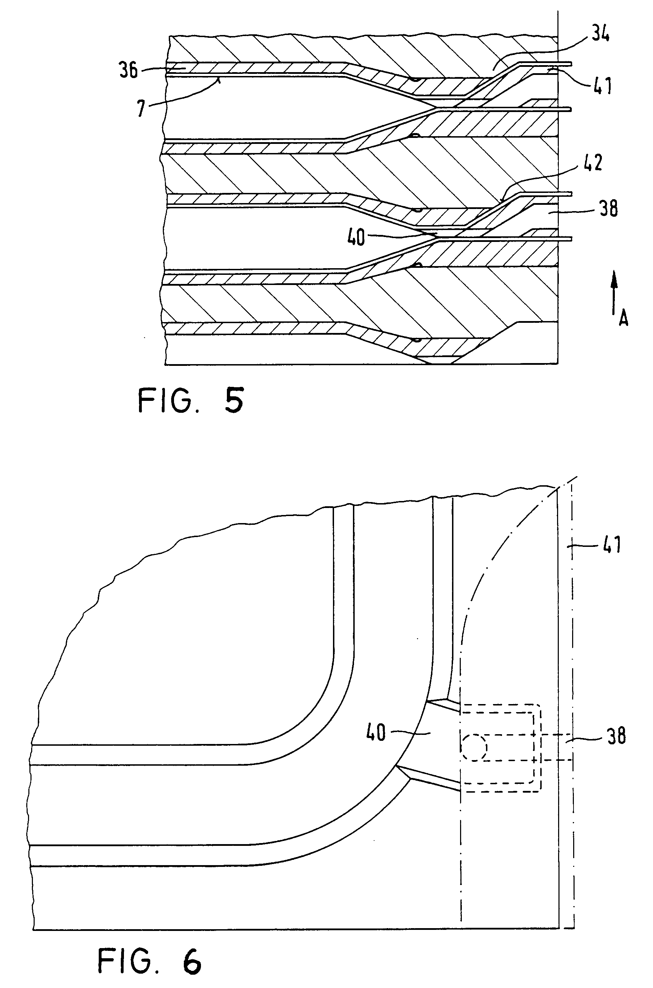

Um nun den Dichtrand 34 der aufgeschweißten Preßmembran durch eine derartige Ausnehmung nicht schwächen zu müssen, ist in Fig. 4 eine Abwandlung der Ausführungsform gem. Fig. 3 dargestellt. Bei dieser Ausführungsform ist der Dichtrand 34 der Preßmembran 36 jeweils mit einer Anzahl von Querrillen 40 versehen, die mit den Trübeaustrittsöffnungen 38 eines Rohrkörpers 41 korrespondieren, der von der Außenseite her in einer bei zusammengeschobenen Filterplatten keilförmige Ausnehmung 42 angeordnet ist. Durch eine entsprechende Formgebung der Ausnehmung 42 im Bereich des Außenrandes kann hierbei erreicht werden, daß beim Zusammenfahren der einzelnen Filterplatten unter der Einwirkung der Schließkräfte der entsprechend keilförmig ausgebildete Rohrkörper 41 in Richtung auf die Filterkammer gegen den schrägverlaufenden Rand 43 des Dichtrandes 34 dichtend angedrückt wird. Auch bei dieser Ausführungsform sind die einzelnen Rohrkörper 41 über entsprechende Öffnungsabstandsmittel 32 gehalten, so daß ihre Mittenposition zur benachbarten Filterplatte exakt eingehalten wird.

Die Rohrkörper in der Ausführungsform gem. Fig. 3 und 4 müssen in bezug auf den Durchlauf des Filterbandes 7 an den beiden Längsseiten der jeweiligen Filterplatte angeordnet sein. Sieht man bei einer Ausführungsform gem. Fig. 3 und 4 Rohrkörper vor, die sich nur über einen Teil der Länge des Dichtrahmens erstrecken, wobei durch die Ausnehmung im Dichtrahmen auch das Filtertuch verformt wird, dann muß bei der Anordnung nur eines Trübeeinlasses auf der gegenüberliegenden Seite des Rahmens ein "Blindeinsatz" vorgesehen werden, um hier zu einer gleichmäßigen Dehnung des Filtertuchs zu kommen. Das gleiche gilt auch, wenn zwei langgestreckte, sich über die volle Seitenlänge einer Filterplatte erstreckender Rohrkörper gem. Fig. 3 vorgesehen wird.

Ein langgestreckter Rohrkörper in der Ausführungsform gem. Fig. 3 oder 4 erlaubt es darüber hinaus, den Einlaß auf einer quer zur Durchlaufrichtung des Filterbandes liegenden Seitenkante der Filterplatten anzubringen, da die zugehörigen Schlauchanschlüsse seitlich herausgeführt werden können. Hier ist mit Rücksicht auf einen freien Kuchenabwurf lediglich an der der Kuchenabwurfseite gegenüberliegenden Längskante der Filterplatte ein derartiger Rohrkörper anzuordnen. Dies ist in Fig. 1 und 2 jeweils durch das in Klammern gesetzte Bezugszeichen 33 angedeutet.

Die in Fig. 5 gezeigte Abwandlung gegenüber Fig. 4 ist eine asymmetrische Gestaltung der Ausnehmung 42 im Bereich der Außenkante des Dichtrandes 34. Hierbei sind die Ausnehmung 42 und die den Trübeaustrittsöffnungen 38 des Rohrkörpers 41 zugeordneten Querrillen 40 jeweils nur auf einer Seite einer Filterplatte angeordnet.

Die Anordnung gem. Fig. 4 und Fig. 5 kann sowohl für durchgehende, stabförmige, als auch für kurze, sich nur über einen Teil der Länge des Dichtrandes erstreckende stabförmige Rohrkörper 41 verwendet werden. In Fig. 6 ist eine derartige Kurzausführung in einer Aufsicht in Richtung A, bezogen auf Fig. 5, dargestellt. Die ausgezogenen Linien zeigen den Eckenbereich einer Filterplatte 4 mit dem Dichtrand 34 und der Querrille 40, die in die von zwei benachbarten Filterplatten begrenzte Kammer mündet.

Der zugehörige, in der Ansicht daraufliegende Rohrkörper 41 ist strichpunktiert gezeichnet wobei die vom Rohrkörper 41 verdeckten Bereiche der Filterplatte 4 bzw. des Dichtrandes 34 gestrichelt gezeichnet sind. Die Zulauföffnung 38 mündet gegen den Dichtrand der benachbarten Platte, so daß durch diese erzwungene Umlenkung der zuströmenden Trübe eine Strahlverbreiterung erzielt wird.

Wie Fig. 6 erkennen läßt, erstreckt sich bei dieser Ausführungsform der Rohrkörper 41 nur über eine kurze Teillänge des Dichtrandes 34 und nur im Eckenbereich. Es können so in zwei aber auch in allen vier Ecken derartige Zuläufe angeordnet werden.

Die anhand von Fig. 5 erläuterte Ausführungsform kann aber auch für durchgehende, stabförmige Rohrkörper verwendet werden. Hierbei sind dann die Querrillen 40 jeweils einer Durchtrittsöffnung 38 zugeordnet.

Die Trübezufuhr erfolgt bei den Ausführungsformen gem. Fig. 3, 4 und 5 jeweils von einem zentralen Zufuhrrohr 44 mittels davon abzweigender Schlauchverbindungen 45, wie dies in Fig. 4 durch die stark ausgezogenen strichpunktierten Linien angedeutet ist.

Sowohl bei der Ausführungsform gem. Fig. 4 als auch bei der Ausführungsform gem. Fig. 5 können für Preßfilterautomaten mit horizontal ausgerichteten Filterplatten, wie in Fig. 1 dargestellt, die einzelnen Rohrkörper 41 jeweils über vertikale Gleit- und Abstandsbolzen an der jeweils oberen Filterplatte aufgehängt werden. Damit bildet immer eine Filterplatte mit ihren zugehörigen Rohrkörpern ein selbständiges in sich geschlossenes Fluchtungssystem beim Öffnen und Schließen des Filterplattenpaketes.

## Patentansprüche

1. Plattenfilter mit mehreren durch eine Schließeinrichtung (6) beweg- und aufeinanderpreßbaren Filterplatten (4), wobei jeweils zwei benachbarte Filterplatten(4) über Öffnungsabstandsmittel (5) miteinander in Verbindung stehen und eine Filterkammer bilden, die durch einen umlaufenden erhöhten Dichtrand (34) an wenigstens einer Filterplatte (4) begrenzt ist und in die wenigstens ein Trübezulauf einmündet, der als gesondertes Einlaßelement ausgebildet ist und mit der zugehörigen Filterkammer in Verbindung steht, wobei die einzelnen Einlaßelemente des durch die Filterplatten (4) gebildeten Filterplattenpaketes über Öffnungsabstandsmittel (32) miteinander verbunden sind, wobei ferner jeweils wenigstens eine der die jeweilige Filterkammer begrenzenden Filterplatten (4) mit einer durch Druckmittel beaufschlagbaren Preßmembran (36) versehen ist und wobei ferner ein vorzugsweise bandförmiges Filtermittel (7) vorgesehen ist, dadurch gekennzeichnet, daß die einzelnen Einlaßelemente jeweils als stabförmige Rohrkörper (33, 41) ausgebildet sind, der in wenigstens einer randseitigen, in Richtung des Dichtrandes (34) verlaufenden nutförmigen Ausnehmung des Dichtrandes abdichtend einlegbar ist und der mit Trübeaustrittsöffnungen (38) versehen ist und daß wenigstens ein Dichtrand zwischen der Filterkammer und der Ausnehmung mit wenigstens einer quer zu seiner Erstreckung verlaufenden Queröffnung versehen ist, die mit den Trübeaustrittsöffnungen (38) des Rohrkörpers (33, 41) korrespondiert und die eine Strömungsverbindung zwischen dem Rohrkörper (33, 41) und der Filterkammer bilden.

2. Plattenfilter nach Anspruch 1, dadurch gekennzeichnet, daß der Rohrkörper (33, 41) sich im wesentlichen über die Filterplattenbreite erstreckt.

3. Plattenfilter nach Anspruch 1 oder 2, dadurch gekennzeichnet, daß die mit der Filterplatte (4) verbundene Preßmembran (36) randseitig verdickt ist und den Dichtrand (34) bildet.

4. Plattenfilter nach einem der Ansprüche 1 bis 3, dadurch gekennzeichnet, daß die Ausnehmung (37) zur Aufnahme des Rohrkörpers (33) im Dichtrandteil (34) der Preßmembran (36) nahe der Filterkammer angeordnet ist.

5. Plattenfilter nach einem der Ansprüche 1 bis 4, dadurch gekennzeichnet, daß die Nut zur Aufnahme des Rohrkörpers (41) randseitig an den Dichtrandteil (34) der Preßmembran (36) angrenzend im Filterplattenrand angeordnet ist.

## Claims

1. Plate filter with a plurality of filter plates (4) which can be moved and pressed against one another by a closing device (6), each two adjacent filter plates (4) being connected together via opening spacing means (5) and forming a filter chamber which is defined by a circumferential raised sealing rim (34) on at least one filter plate (4) and into which at least one slurry feed leads, which feed is formed as a separate inlet element and is connected to the associated filter chamber, the individual inlet elements of the filter plate pack formed by the filter plates (4) being connected together via opening spacing means (32), at least one of the filter plates (4) defining the respective filter chamber in each case being provided with a pressure membrane (36) which can be acted upon by pressure medium, and a filter medium (7) which is preferably band-shaped being provided, characterised in that the individual inlet elements are each formed as a rod-shaped tubular body (33, 41) which can be placed in a sealing manner in at least one groove-shaped recess in the sealing rim (34) which extends in the direction of the latter and is disposed at the edge, which body is provided with slurry outlet openings (38), and that at least one sealing rim is provided between the filter chamber and the recess with at least one transverse opening which extends transversely to its extent, corresponds with the slurry outlet openings (38) in the tubular body (33, 41) and forms a flow connection between the tubular body (33, 41) and the filter chamber.

2. Plate filter according to claim 1, characterised in that the tubular body (33, 41) essentially extends over the filter plate width.

3. Plate filter according to claim 1 or 2, characterised in that the pressure membrane (36), which is connected to the filter plate (4), is thickened at the edge and forms the sealing rim (34).

4. Plate filter according to one of claims 1 to 3, characterised in that the recess (37) for holding the tubular body (33) in the sealing rim part (34) of the pressure membrane (36) is disposed near the filter chamber.

5. Plate filter according to one of claims 1 to 4, characterised in that the groove for holding the tubular body (41) is disposed in the edge of the filter plate adjacent to the sealing rim part (34) of the pressure membrane (36).

## Revendications

1. Filtre à plaques comportant plusieurs plaques de filtration (4) pouvant être déplacées et appliquées sous pression l'une contre l'autre par un dispositif de fermeture (6), filtre dans lequel deux plaques de filtration (4) voisines sont reliées respectivement l'une à l'autre par des moyens d'écartement à l'ouverture (5) et forment une chambre de filtration, laquelle est limitée par un bord d'étanchéité (34) périphérique surélevé sur au moins une plaque de filtration (4) et dans laquelle débouche au moins une arrivée d'eau trouble, laquelle arrivée est agencée en tant qu'élément d'entrée individuel et est reliée à la chambre de filtration correspondante, filtre dans lequel les éléments d'entrée individuels du paquet de plaques de filtration constitué par les plaques de filtration (4) sont reliés entre eux par des moyens d'écartement à l'ouverture (32), filtre dans lequel en outre respectivement au moins une des plaques de filtration (4) limitant la chambre de filtration correspondante est munie d'une membrane de pression (36) qui peut être soumise à un fluide sous pression, et dans lequel, de plus, un moyen de filtration (7), réalisé avantageusement sous forme de bande, est prévu, caractérisé par le fait que les éléments d'entrée individuels sont réalisés en tant que corps tubulaires (33, 41) en forme de tige, et que chacun de ces corps tubulaires peut être placé de manière étanche dans au moins un évidement, en forme de rainure, du bord d'étanchéité, prévu du côté du bord et s'étendant dans la direction du bord d'étanchéité (34), et est muni d'ouvertures de sortie d'eau trouble (38), et par le fait qu'au moins un bord d'étanchéité est prévu entre la chambre de filtration et l'évidement, avec au moins une ouverture transversale s'étendant transversalement par rapport à son extension, laquelle ouverture transversale est en correspondance avec les ouvertures de sortie d'eau trouble (38) du corps tubulaire (33, 41), et établit une liaison d'écoulement entre le corps tubulaire (33, 41) et la chambre de filtration.

2. Filtre à plaques selon la revendication 1, caractérisé par le fait que le corps tubulaire (33, 41) s'étend essentiellement suivant la largeur de la plaque de filtration.

3. Filtre à plaques selon la revendication 1 ou 2, caractérisé par le fait que la membrane de pression (36) liée à la plaque de filtration (4) présente une épaisseur renforcée sur son bord et constitue le bord d'étanchéité (34).

4. Filtre à plaques selon l'une des revendications 1 à 3, caractérisé par le fait que l'évidement (37) pour recevoir le corps tubulaire (33) est disposé dans la partie de bord d'étanchéité (34) de la membrane de pression (36), au voisinage de la chambre de filtration.

5. Filtre à plaques selon l'une des revendications 1 à 4, caractérisé par le fait que la rainure destinée à recevoir l'élément tubulaire (41) est disposée au bord, sur la partie de bord d'étanchéité (34) de la membrane de pression (36), en limite du bord de la plaque de filtration.
